# NEUE EUROPÄISCHE PATENTSCHRIFT

(11) **EP 0 567 660 B2**
(45) Veröffentlichungstag und Bekanntmachung des Hinweises auf die Entscheidung über den Einspruch: **06.09.2000**
(45) Hinweis auf die Patenterteilung: 14.02.1996
(21) Anmeldenummer: 92106777.3
(22) Anmeldetag: 21.04.1992
(51) Int. Cl.: G05D 1/02, G01C 21/20, F41G 3/16

(54) **Einrichtung zum Führen von Fahrzeugen**
Device for the guiding of vehicles
Dispositif pour la conduite de véhicules

(43) Veröffentlichungstag der Anmeldung: 03.11.1993
(73) Patentinhaber: IBP Pietzsch GmbH, 76275 Ettlingen (DE)
(72) Erfinder: Hedwig,Wolfgang, D-5300 Bonn 1 (DE); Kreft,Fritz-Hermann, D-5300 Bonn 1 (DE); Wiemer,Karl-Heinz Dr., D-7505 Ettlingen 5 (DE); Winter.Horst, D-7500 Karlsruhe 31 (DE)
(74) Vertreter: Liesegang, Roland, Dr.-Ing.

(56) Entgegenhaltungen:
- DE-A- 3 404 202
- DE-A- 4 033 832
- GB-A- 2 078 914
- PATENT ABSTRACTS OF JAPAN vol. 13, no. 524 (P-964)22. November 1989
- INTERNATIONAL CONGRESS ON TRANSPORTATION ELECTRONICS- PROCEEDINGS- Oktober 1988, DEARBORN US Seiten 229 - 235 P. BUMANN 'VEHICLE COMMUNICATION IN EUROPE'
- REVUE INTERNATIONALE DE DEFENSE Bd. 21, Nr. 4, 1988, COINTRIN-GENEVE CH Seiten 369 - 372 R. SALVY & G. TURB 'FRANCE- DES SOLUTIONS ORIGINALES EN MATI RE DE VISUALISATION'
- VIPS for On-Board Navigation,command & Control; Ericson 1991
- VCTIS,Vehicle Command and Tactical Information System;Computing Devices Company

## Beschreibung

Die Erfindung betrifft ein Führungssystem zum Führen von Fahrzeugen, wobei gespeicherte Informationen, aus der Umgebung gewonnene Informationen und Informationen bezüglich des Zustandes von Baugruppen, wie die Position vom Beobachtungsgerät am Fahrzeug, bereitgestellt werden und Kommunikationseinrichtungen, Vorrichtungen zum Auslösen von Funktionen, ein digitaler, mit einem Prozessor und einem Arbeitsspeicher versehener Führungsrechner sowie gegebenenfalls eine Navigationsanlage vorhanden sind.

Zum Führen eines Fahrzeuges oder mehrerer Fahrzeuge eines Fahrzeugverbandes von einem Führungsfahrzeug aus sind heute als Führungs- und Informationsmittel Sichtgeräte, Okulare, Fernseh- und Wärmebildkameras mit Bildschirm, eine Navigationsanlage, Funksprechgeräte sowie als Hilfsmittel ein Führungsrechner mit Prozessor und Arbeitsspeicher bekannt. Bekannte Geräte für Sicht- und Visierhilfen sind in DE 30 24 330 C2 und in DE 32 12 729 C2 beschrieben.

Mithilfe solcher und anderer Geräte muß das Führungspersonal, wie der Kommandant eines Kampffahrzeuges, die gelieferten Informationen sichten, klassifizieren und mithilfe von Informationskonserven, wie Kartenmaterial etc, auswerten und zu Entscheidungen verarbeiten. Leuchtanzeigen, Tasten und Schalter müssen beachtet und bedient werden; Winkelspiegel und Periokular sind einzusehen, Kartenmaterial muß studiert, verglichen und aktualisiert werden; Funkverkehr und Bordkommunikation müssen durchgeführt werden. All dies nimmt gewöhnlich den größten Teil der verfügbaren Zeit und Aufmerksamkeit des Führungspersonals in Anspruch.

Hat der Kommandant die notwendigen Informationen gewonnen, so muß er sie klassifizieren, auswählen und verknüpfen, um sich ein Bild der Lage zu machen und das hohe technische Leistungspotential seines Fahrzeuges bzw. der Fahrzeuge seines Verbandes optimal zu nutzen.

Diese Nutzung ist aus folgenden Gründen bei Zuhilfenahme der vorhandenen Informations- und Führungsmittel stark eingeschränkt: Die Informationsübermittlung und Verarbeitung und die daraus resultierende Entscheidungsfindung sind zu langsam, und die Orientierung über die eigene Position und Situation sind zu ungenau. Die Führungs-Nebenaufgaben beanspruchen den Kommandanten bzw. das Führungspersonal zu stark, so daß für den eigentlichen Führungsauftrag zu wenig Zeit verbleibt.

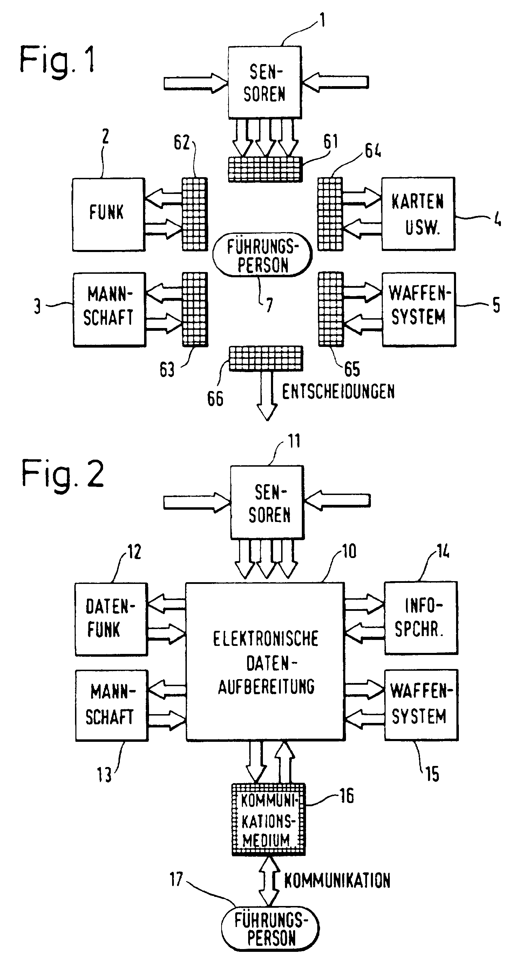

In Figur 1 ist die derzeitige Konfiguration in einem Kampffahrzeug schematisch veranschaulicht. Dabei bedeuten die unschraffierten Kästen 1 bis 5 in gleicher Reihenfolge Sensoren, Funk, Mannschaft, Kartenmaterial und Waffensystem, die Pfeile Informationswege, die kreuzschraffierten Felder 61 bis 65 unterschiedliche Bedien- und Anzeigeelemente und das Oval 7 die Kommandanten-Position. Figur 1 macht die geschilderte Problematik deutlich, welche der Kommandant als zentrale "Schaltstelle" beim Führen durch Sichten und Verarbeiten der Informationen sowie anschließendes Entscheiden bewältigen muß.

Um dem Fahrer eines Einzelfahrzeuges die Orientierung und das Anfahren von Zielen in unbekannter Umgebung zu erleichtern, ist ein in das Fahrzeug eingebautes Navigationssystem bekannt, welches einen Rechner mit Graphikprozessor, eine Videoelektronik, einen Massenspeicher und einen interaktiven Bildschirm hat, wobei in den Rechner aus der Umgebung mittels Sensoren gewonnene Informationen und/oder über Datenfunk übermittelte Informationen eingegeben werden (DE-A-4 033 832).

Es sind ein Verfahren und eine Vorrichtung für die Zuweisung von Zielen an Beobachtungsgeräte oder Visieranlagen von Waffensystemen in Kampfpanzern bekannt, wobei die Zielzuweisung mittels Richtgriffel auf einem Bildschirm erfolgt (DE-A-3 342 338).

In einer Anordnung zum Überwachen eines Kampfpanzers von einem Kommandostand aus ist ein Fernsehgerät bekannt, in dessen Bildschirm gleichzeitig zwei Fernsehbilder, nämlich ein Bild der Umgebung und ein Teilbild der Umgebung einblendbar sind, wobei das erstgenannte Bild mit einer am Fahrzeug angeordneten TV-Kamera und das letztgenannte Bild mit einer mit der Waffe starr verbundenen TV-Kamera aufgenommen sind (GB-A-2 078 914).

Der Erfindung liegt die Aufgabe zugrunde, eine Einrichtung der beschriebenen Art zum Führen von Fahrzeugen, insbesondere von Kampffahrzeugen, so auszugestalten, daß führende Personen bei der Führung eines Fahrzeuges oder eines Fahrzeugverbandes, wie eines Kampfverbandes schneller, genauer und übersichtlicher informiert und von der Informationsverarbeitung weitgehend entlastet werden, um so wertvolle Zeit für die eigentlichen Führungshandlungen zu gewinnen.

Zur Lösung dieser Aufgabe ist ein Führungssystem mit den Merkmalen des Anspruchs 1 vorgesehen.

Die aus der Umgebung gewonnenen Informationen können über fahrzeugseitige oder externe Sensoren gewonnen sein und im letzteren Fall auch über Datenfunk an die Einrichtung übermittelt werden.

Der bisher nur als Hilfsmittel fungierende Führungsrechner wird bei der Einrichtung nach der Erfindung zum Kernbestandteil. Er weist erfindungsgemäß einen Grafikprozessor, eine Videoelektronik, ein Massenspeicherinterface mit Massenspeicher und mindestens einen interaktiven Bildschirm auf, über den sämtliche aufgenommenen, gespeicherten und abzugebenden Informationen in Form von digitalen Daten betreffend die Führung, den Zustand und die Einsatzsituation des Fahrzeuges visualisiert werden. Diese Visualisierung umfaßt für die führende Person sämtliche aus den verschiedenen Informationsquellen stammenden Informationen nach Verarbeitung in dem Grafikprozessor so aufbereitet zusammen, daß die führende Person nur noch ein Minimum an Verarbeitung zu leisten hat, weil sie nicht mehr als "Schaltzentrale" für Informationen, sondern als Benutzer und Steuerer von durch den Führungsrechner aufbereiteten, aus der Gesamtinformationsmenge ausgewählten, für die Führung wesentlichen Informationen fungiert.

Bei dem erfindungsgemäßen Führungssystem sind mindestens zwei Partner, nämlich ein Führungsfahrzeug und mindestens ein geführtes Fahrzeug beteiligt, wobei in jedem Fahrzeug des Fahrzeugverbandes eine erfindungsgemäße Einrichtung vorgesehen ist.

Dem Bildschirm der Einrichtung nach der Erfindung ist ein programmierbares Funktionstastenfeld zugeordnet, mittels dem eine Hauptbildfeld-/Kartendarstellungs-Korrelation oder eine Panoramabild-/Detailbild-Korrelation durch Einblenden einer Marke im Panoramabild und entsprechendes Abbilden in der Kartendarstellung bzw. im Detailbild herstellbar sind. Auch können mittels Cursor oder durch Tastendruck und anschließendes Berühren mit den Fingern Symbole in dem Hauptbildfeld gesetzt werden, welche die eigene Position einschließlich deren Ausrichtung und Blickrichtung des vergrößernden Sensors im Bild darstellen.

Bei einer Einrichtung nach der Erfindung werden der Führungsperson von dem als Kommunikationsmedium dienenden Bildschirm schnell und übersichtlich Informationen angeboten, die relevant sind. Dazu gehören auch gespeicherte Informationen, sogenannte Informationskonserven, gleich ob Zahlen, Texte oder Bilder, z. B. Karten, die elektronisch im Massenspeicher gespeichert sind. Die Führungsperson fungiert als Benutzer der durch den Bildschirm gegebenen interaktiven Schaltstellen, anstatt wie bisher selbst diese Schaltstelle zu bilden. Die auf dem Bildschirm des Führungsfahrzeuges angebotenen bzw. ausgewählten Informationen können über dasselbe Kommunikationsmedium schnellstens an alle Plätze der entsprechenden Einrichtungen eines Verbandes übermittelt werden, beispielsweise auch automatisch oder halbautomatisch über Datenfunk, und können von außen aktualisiert werden.

Bei einer bevorzugten Ausgestaltung der erfindungsgemäßen Einrichtung ist der Bildschirm berührungsempfindlich ausgebildet, wie aus der DE-A-4 033 832 bekannt, so daß z. B. durch Berührung mit den Fingern Ergänzungen bzw. Änderungen in dem Bildschirmbild generiert werden können, z. B. Symbole in dem Bildschirm berührungsempfindlich ausgebildet, so daß durch Berührung mit den Fingern Symbole in dem Bildschirmbild gesetzt werden können, das Bild durch Streichen mit den Fingern über den Bildschirm in die gewünschte Richtung verschoben werden kann und dergleichen.

Dies ist von besonderem Vorteil dann, wenn eine elektronisch gespeicherte Karte oder ein Kartenausschnitt in einem Hauptbildfeld des Bildschirmes dargestellt werden. Wie eine echte Karte kann dann die Kartendarstellung auf die beschriebenen Weise in dem Bildschirm so verschoben werden, daß bisher nicht sichtbare Abschnitte ins Blickfeld der Führungsperson gelangen.

Bevorzugt sind unterschiedliche Maßstäbe für das Bildschirmbild wählbar. Es ist auch von Vorteil, wenn unterschiedliche Darstellungen einblendbar sind, z. B. in dem Hauptbildfeld wahlweise eine Kartendarstellung oder ein vergrößertes Detailbild der Umgebung und in einem weiteren Bildfeld die Darstellung eines Panoramabildes der Umgebung. In der Praxis kann dieses weitere Bildfeld vorzugsweise auf drei gesonderten Bildschirmen dargestellt sein, die azimutal je einen 60°-Ausschnitt der Umgebung zeigen.

All dies erleichtert dem Führungspersonal die Orientierung und verkürzt die Zeit zum Treffen von Führungsentscheidungen erheblich.

Die Erfindung ist im folgenden anhand schematischer Zeichnungen an Ausführungsbeispielen mit weiteren Einzelheiten näher erläutert. Es zeigen:
- Fig. 2: ein Prinzipbild einer Einrichtung nach der Erfindung ähnlich Figur 1;
- Fig. 3: ein Blockschaltbild einer Einrichtung nach der Erfindung;
- Fig. 4: eine schematische Darstellung der Bildschirmeinteilung des Bildschirmes einer Einrichtung nach der Erfindung;
- Fig. 5 und 6: Blockschaltbilder von abgewandelten Einrichtungen nach der Erfindung und
- Fig. 7: ein Blockschaltbild einer in einem Versuchsträger bzw. einem Kampffahrzeug eingesetzten Einrichtung nach der Erfindung.

In Figur 2 ist die Konfiguration der wesentlichen Elemente einer Einrichtung nach der Erfindung symbolisch dargestellt. Um ein zentrales Quadrat 10 sind Kästen 11, 12, 13, 14, 15 mit dem Inhalt (in gleicher Reihenfolge) Sensoren, Datenfunk, Mannschaft, Informationsspeicherung, Waffensystem gruppiert. Das zentrale Quadrat 10 symbolisiert eine elektronische Datenaufbereitung. Diese steht mit den Baugruppen 11 bis 15 und einem weiteren Kasten 16 im Datenwechselverkehr (symbolisiert durch entgegengesetzte Pfeile). Dieser kreuzschraffierte Kasten 16 symbolisiert ein Kommunikationsmedium, wie einen interaktiven Bildschirm.

Die Führungsperson, wie der Kommandant, sitzt nicht mehr wie bei der herkömmlichen Konfiguration nach Figur 1 im Zentrum als "Schaltstelle" zur Aufnahme, Verarbeitung, Weiterleitung und Entscheidungsbildung, sondern benutzt das einheitliche Kommunikationsmedium (Bildschirm) 16 als interaktive Schaltstelle, welche diejenigen - und nur diejenigen - Informationen anbietet, die für die Führung des Fahrzeuges bzw. eines Fahrzeugverbandes relevant sind. Informationskonserven (Zahlen, Texte, Kartenbilder und dergleichen) sind elektronisch im Kasten 14 gespeichert. Solche Informationskonserven können daher bildlich durch ein und dasselbe Kommunikationsmedium 16 an entsprechenden Einrichtungen anderer Fahrzeuge gleichzeitig zugänglich gemacht werden. Darüber hinaus können sie über Datenfunk automatisch oder halbautomatisch ausgetauscht und von außen her aktualisiert werden. Damit läßt sich erreichen,
- daß das Führungspersonal von Nebenaufgaben wie der Positionsermittlung, der Positions- und Statusübermittlung und der verbalen Entgegennahme von Lageinformationen entlastet wird,
- daß die Zeiten für Informationsübertragung und Informationsverarbeitung verkürzt werden,
- daß die Orientierung und Beweglichkeit des Fahrzeuges/ Fahrzeugverbandes im Gelände verbessert wird und
- daß die Informationen über Standorte eigener und fremder Kräfte nahezu ohne Zeitverzug auf allen Führungsebenen vorliegen.

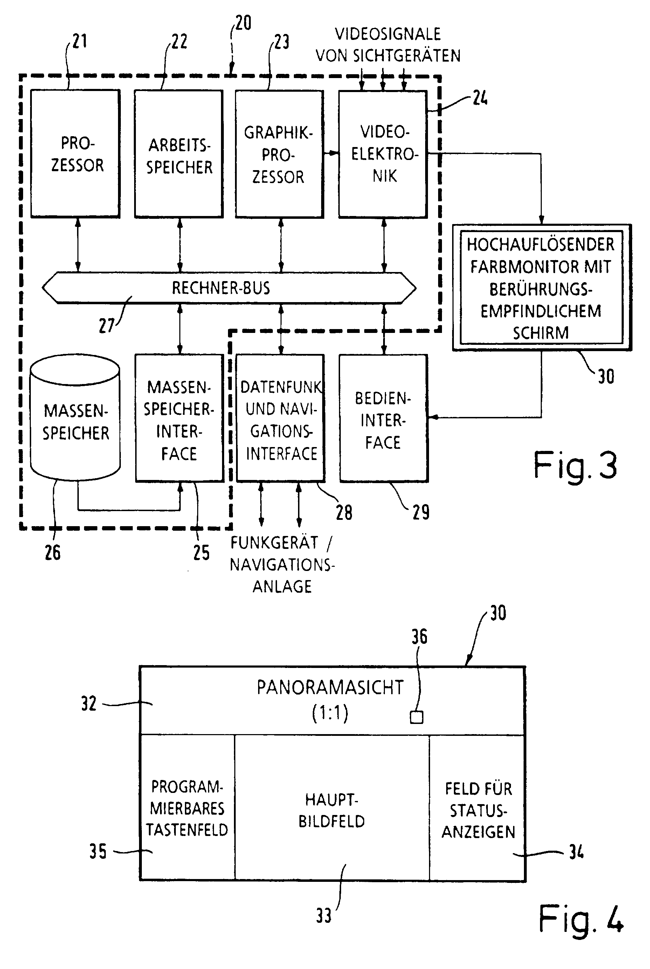

In dem Blockschaltbild nach Figur 3 sind die notwendigen Grundbestandteile einer Einrichtung nach der Erfindung, auf die in keinem Anwendungsfall verzichtet werden kann, mit einer gestrichelten Linie umrandet und mit der Bezugszahl 20 bezeichnet. Im folgenden sind diese Grundbestandteile als "Kern" bezeichnet. Dieser Kern 20 umfaßt den Prozessor 21 eines Führungsrechners, einen Arbeitsspeicher 22, einen Grafikprozessor 23, eine Videoelektronik 24 und ein Massenspeicherinterface 25 mit Massenspeicher 26 sowie schließlich einen Rechnerbus 27, über den die genannten Baugruppen im Datenaustausch stehen.

Bei der Ausführung nach Figur 3 kommen zu dem so gebildeten Kern 20 noch die Bestandteile Datenfunk- und Navigations-Interface 28, Bedien-Interface 29 und interaktiver Bildschirm 30 mit hochauflösendem Farbmonitor mit hochauflösendem, berührungsempfindlichen Bildschirm hinzu.

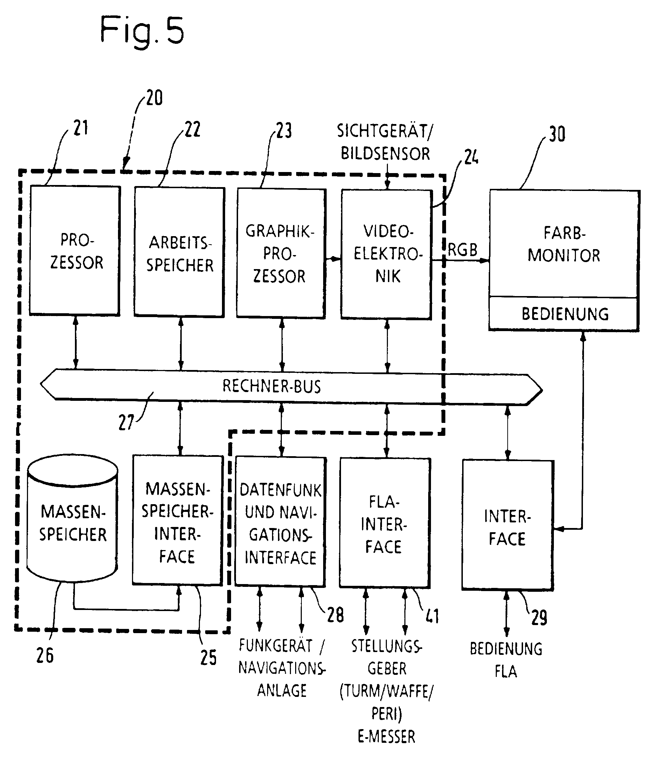

Figur 4 zeigt eine besonders nützliche Aufteilung des Bildschirmes 30 in ein Hauptbildfeld 31, ein darüber angeordnetes Panoramasichtfeld 32 und seitlich angeordnete Felder 33, 34 für Statusanzeigen und für ein programmierbares Tastenfeld.

In dem Hauptbildfeld 33 läßt sich beispielsweise eine Karte oder ein Kartenausschnitt (aus dem Massenspeicher 26 abrufbar) nacheinander in unterschiedlichen Maßstäben darstellen. Stattdessen kann hier ein Detailbild der Umgebung dargestellt sein, das beispielsweise mit einem vergrößernden Sichtgerät gewonnen wurde.

Durch Berühren mit den Fingern lassen sich Marken in dem Hauptbildfeld 33 setzen und verschieben, die beispielsweise für Position und Ausrichtung des oder eines Fahrzeuges eines Fahrzeugverbandes charakteristisch sind. Durch Streichen über den Bildschirm in einer bestimmten Richtung kann man andere Kartenausschnitte in das Bildschirmbild "bewegen", die bisher nicht sichtbare Teile der Karte ins Sichtfeld der Führungsperson bringen. Das Panoramasichtfeld 32 enthält beispielsweise eine durch optronische Winkelspiegel gewonnene Panoramasichtdarstellung in natürlicher Größe der Umgebung. Bei einer Ausführung der Erfindung sind hier drei Darstellungen nebeneinander abgebildet, die jeweils aneinandergrenzende 60°-Abschnitte (azimutal) der Umgebung überstreichen. Diese Abschnitte können auch auf insgesamt drei gesonderten Bildschirmen dargestellt werden.

Über das Tastenfeld und/oder durch Berühren mit den Fingern können wahlweise die gewünschten Funktionen angewählt werden. Auch ist das Setzen oder Verschieben einer Markierung auf dem Bildschirm mittels Cursor oder Richtgriff (Joystick) möglich. Die Steuerung durch Berühren oder durch Cursor/Richtgriffbetätigung sind auch kombiniert möglich.

Für das Arbeiten mit der Karte läßt sich digitalisiertes Kartenmaterial beispielsweise in den Maßstäben 1 : 50 000 und 1 : 250 000 auf dem Bildschirm darstellen. Ein Teil der digitalisierten Karte steht im Arbeitsspeicher 22 zur Verfügung, wobei der Bildschirm 30 auch nur einen Ausschnitt aus dem Arbeitsspeicherinhalt wiedergeben kann. Mit dem Finger (oder Cursor) kann zunächst der Bildschirmausschnitt in alle Himmelsrichtungen verschoben werden, bis auch der Rand des im Arbeitsspeicher22 abgelegten Kartenausschnittes erreicht ist. Wird ein Ausschnitt gewünscht, der außerhalb des Arbeitsspeicherbereiches liegt, so werden Kartendaten aus dem Massenspeicher 26 nachgeladen, was innerhalb weniger Sekunden erfolgt. Dananch kann in dem neugeladenen Kartenbereich wie beschrieben verfahren werden.

Um von dem größeren Maßstab in den kleineren Maßstab umzuschalten, kann die Lage des gewünschten Ausschnittes der Karte im Panoramabild durch einen Rahmen 36 auf dem Bildschirm dargestellt werden. Dieser Rahmen 36 bezeichnet den momentan vom vergrößernden Sensor anvisierten Geländeausschnitt. Den Rahmen kann man mittels Finger oder Cursor zur gewünschten Detail-Kartenstelle verschieben, wobei dann durch Abheben des Fingers oder Betätigen einer "Detailbild"-Taste der gewünschte Kartenausschnitt im Hauptbildfeld 33 erscheint. In diesem ist durch eine Gerade die Blickrichtung des vergrößernden Sensors darstellbar. Danach kann dann die eigentliche interaktive Arbeit mit der Karte erfolgen.

Alternativ kann im Hauptbildfeld der durch den Rahmen 36 bezeichnete Geländeausschnitt vergrößert dargestellt werden.

Die Tatsache, daß jeder Bildpunkt der Karte in dem Bildschirmbild bezüglich seiner grafischen Koordinaten eindeutig definiert ist, erlaubt eine sehr schnelle und einfache Bestimmung beliebiger Koordinaten. Dazu ist lediglich die zu bestimmende Position mit dem Cursor bzw. dem Finger anzusteuern, worauf dann in einem Textfeld auf dem Bildschirm die Nord- und Ostwerte in UTM-Gitterkoordinaten abgelesen werden können.

Zum Setzen eines Symbols, wie für ein Fahrzeug, in der Kartendarstellung kann der Kommandant die mit dem Symbol "Fahrzeug" versehene Taste des Tastenfeldes 35 drücken und das dann gleichsam an seinem Finger "haftende" Symbol auf die Kartendarstellung im Hauptbildfeld 33 durch Berühren des Bildschirms an der gewünschten Stelle übertragen. Handelt es sich um die eigene Position, so lassen sich aufgrund der Panoramabild-/Kartendarstellungs-Korrelation die eigene Fahrzeugausrichtung und die Blickrichtung des vergrößernden Sensors darstellen.

Zur Überprüfungund Aktualisierung der eigenen Position kann an mit dem Fahrzeug auf eine definierte Stelle im Gelände, z. B, eine Straßenkreuzung, fahren und diese in der Karte auf dem Bildschirm markieren. Die dann angezeigten Werte können nun manuell in eine herkömmliche Fahrzeugnavigationslage eingegeben oder bei geeigneter Verbindung auf Tastendruck direkt übertragen werden. Die laufende Aktualisierung der eigenen Position übernimmt dann die Navigationsanlage des Fahrzeugs, von der auch die Informationen für die automatische Lage- und Richtungsdarstellung des eigenen Fahrzeugs im Bildschirm stammen.

Die Kenntnis der Eigenposition der Fahrzeugrichtung und der Sichtgerät- bzw. Waffenwinkel und die aktuelle Darstellung auf der Karte erlauben es, sehr einfach aus der Karte heraus Beobachtungs-, Ziel- oder Waffenrichtung vorzugeben. Ist beispielsweise die Beobachtungsrichtung eines aus der Karte bekannten kritischen Geländestückes erforderlich, so braucht diese Lage nur auf dem Panoramasichtfeld 32 markiert zu werden, worauf ein vergrößerndes Sichtgerät selbsttätig in die inertial, d. h. geländebezogen richtige Richtung eingeschwenkt wird. Zur.Verdeutlichung läßt sich das markierte Geländestück auf der Kartendarstellung im Hauptbildfeld 33 kennzeichnen und die daraus ermittelte Beobachtungsrichtung durch die erwähnte Gerade darstellen.

Die Kombination aus der Karten- und der Sichtdarstellung in dem Bildschirm 30 bietet eine Möglichkeit, in die jeweils andere Darstellung Informationen (insbesondere grafischer Art) einzublenden. So kann in der Kartendarstellung ein gesetztes Fahrzeugsymbol um Zusatzinformationen, wie Turm/Waffenstellung, Zielgeräte-Richtung, Blickrichtung eines optischen und optronischen Sensors oder Blickrichtung eines vergrößernden Sichtgerätes ergänzt werden. Diese Zusatzinformationen sind beispielsweise in Form von farbigen kurzen Strichen und spitzwinkligen Dreiecken zur Bezeichnung der Blickrichtung oder dergleichen einblendbar, wobei die einzelnen Elemente mit dem Fahrzeugsymbol gemeinsam verschiebbar und um die Winkel entsprechend der wirklichen Situation zueinander beliebig verdrehbar sind. Dies geschieht dadurch, daß die Winkel durch entsprechende Stellungsgeber (nicht gezeigt) ständig automatisch erfaßt und an den Prozessor 21 übertragen werden, der dann die entsprechende Grafik generiert. Damit kann die Führungsperson des Fahrzeuges auf einen Blick sehen, welche Richtung die einzelnen Geräte des eigenen Fahrzeuges oder der Freundfahrzeuge eines Verbandes einnehmen und wie sie zueinander stehen. Umgekehrt genügt zum Erfassen und geographischen Zuordnen der eigenen Position bezüglich eines kritischen Geländeabschnittes mithilfe des Sichtgerätes ein Blick auf die Karte, um die Richtung dieses Geländeabschnittes bezüglich der eigenen Position zu markieren.

Die Symbolik der Richtungszuordnung kann auch teilweise für die Einblendung in das Bildfeld des Sichtgerätes verwendet werden, so daß auch dann, wenn auf dem Bildschirm 30 keine Karte dargestellt wird, die Zuordnung der Geräteeinrichtungen eindeutig erkennbar ist.

In der Betriebsart, bei der ausschließlich Sichtbilder der Umgebung, also keine Kartendarstellung, auf dem Bildschirm dargestellt werden, können zur besseren Orientierung in die Sichtbilder Zusatzinformationen eingeblendet werden. Eine gute Unterstützung stellt der erwähnte Rahmen 36 dar, der in das mittels eines optronischen Winkelspiegels gewonnene Panoramabild eingeblendet wird und genau den Ausschnitt markiert, der von einem vergrößernden Sensor oder Sichtgerät erfaßt und in dem Hauptbildfeld 33 dargestellt wird. Mit der Bewegung des Sichtgerätes wird auch der Rahmen 36 verschoben, so daß das Umfeld in der Gesamtsichtdarstellung leicht beobachtet werden kann, während die Details im Hauptbildfeld oder auf einem weiteren Monitor sichtbar gemacht sind. Diese Funktion läßt sich auch dazu nutzen, mittels Richtgriff oder - bei Einsatz des berührungsempfindlichen Bildschirmes - mittels Antippen das Sichtgerät in eine gewünschte Richtung zu schwenken und dann den vergrößerten Bildausschnitt im Hauptbildfeld anzusehen.

Liegt die Beobachtungsrichtung des Sichtgerätes außerhalb des Bereiches, der mit dem optischen oder optronischen Sensor (Winkelspiegel) erfaßt wird, ist die Einblendung des Rahmens 36 nicht möglich. In diesem Fall kann aber die Richtung des Sichtgerätes durch einen Pfeil bzw. ein spitzwinkliges Dreieck in der Art eines Uhrzeigers charakterisiert werden, wobei die Zwölf-Uhr-Stellung genau der Mittenrichtung des optronischen Winkelspiegels entsprechen.

Die Verwendung des interaktiven Bildschirmes 30 zur Darstellung eines von einem vergrößernden Sichtgerät erzeugten Bildes der Umgebung im Hauptbildfeld 33 bietet die Möglichkeit des direkten Einrichtens eines Gerätes durch Markieren eines Zielpunktes auf dem Bildschirm. Berührt man bei dieser Betriebsart mit dem Finger einen Punkt auf dem Bildschirm, den man anvisieren möchte und der außerhalb der Bildmitte liegt, kann man dadurch automatisch das Einlaufen des angewählten Gerätes auf diese Richtung auslösen. In der Folge davon erscheint das markierte Objekt sofort in der Bildmitte.

Ferner kann man den interaktiven Bildschirm 30 mit seinem programmierbaren Tastenfeld auch dazu nutzen, nicht typische Funktionen, wie übliche Feuerleitfunktionen, zu wählen.

Eine wichtige weitere Hilfestellung für die Führung ergibt sich daraus, daß der Kommandant in eine Kartendarstellung wie oben beschrieben zusätzliche Daten wie die Eigenposition, die Position von Fremd- und Feindfahrzeugen durch Einspeichern in den Massenspeicher in Form von sogenannten Overlays, d.h. dem Grundspeicherinhalt überlagerter Speicherschichten einspeichern und nach Wunsch wieder aufrufen, aktualisieren und erneut abspeichern kann.

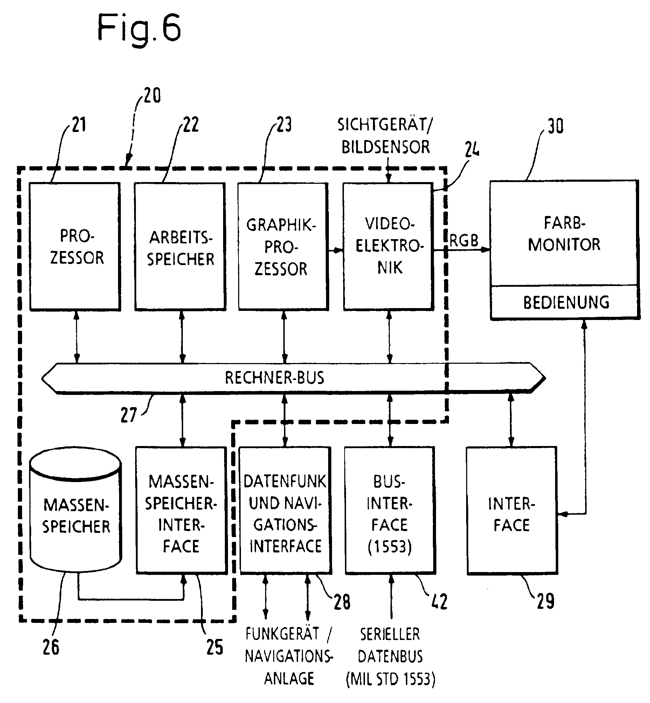

Bei den Ausgestaltungen nach den Fig. 5 und 6 sind gleiche Baugruppen mit gleichen Bezugszahlen wie in der Fig. 3 belegt. Insbesondere der Kern 20 des Führungsrechners stimmt mit seinen Einzelbaugruppen 21 bis 27 dabei mit dem Kern 20 nach Fig. 3 überein. Darüberhinaus ist auch bei den Konfigurationen nach den Fig. 5 und 6 ein Datenfunk- und Navigations-Interface 28 zur Kommunikation mit Funkgerät/Navigationsanlage vorgesehen.

Fig. 5 zeigt die Einrichtung nach der Erfindung für den Anschluß an ein zentral aufgebautes Feuerleitsystem mit einem zusätzlichen Interface 41 für am Fahrzeug angeordnete Stellungsgeber und Entfernungsmesser. Enthält das System, an das die Einrichtung nach der Erfindung adaptiert werden soll, bereits einen seriellen Datenbus, tritt an die Stelle des direkten Interfaces 41 zu den genannten Gebern gemäß Fig. 5 ein universelles Bus-Interface 42 mit Anschluß an den seriellen Datenbus. Die Baugruppen Bildschirm bzw. Farbmonitor 30 und Interface 29 zur Anbindung an den Rechnerbus 27 sind bei den Ausführungen nach Fig. 5 und 6 prinzipiell ebenso aufgebaut wie bei der Ausführung nach Fig. 3.

Die Ausführungen nach Fig. 5 und 6 eignen sich alternativ für einen Einsatz in einem Kampffahrzeug.

In der EP 0 411 480 A2 ist ein Versuchsträger beschrieben, der als Einsatz in einer Turmöffnung eines gepanzerten Fahrgestells gestaltet ist. Ein solcher Versuchsträger eignet sich unter anderem auch zur Erprobung einer Einrichtung nach der Erfindung und bietet zunächst die Möglichkeit eine Geräteausstattung vorzusehen, die über das hinausgeht, was später in einem serienmäßig ausgeführten Fahrzeug integrierbar ist. Um für eine spätere konkrete Fahrzeugausrüstung eventuell erforderliche Abstriche an der richtigen Stelle vornehmen zu können, ist bei der Komplexität der Einrichtung nach der Erfindung erforderlich, auf experimentelle Ergebnisse zurückgreifen zu können. Dem dient der Versuchsträger, zu dessen Einzelheiten auf die EP 0 411 480 A2 verwiesen wird.

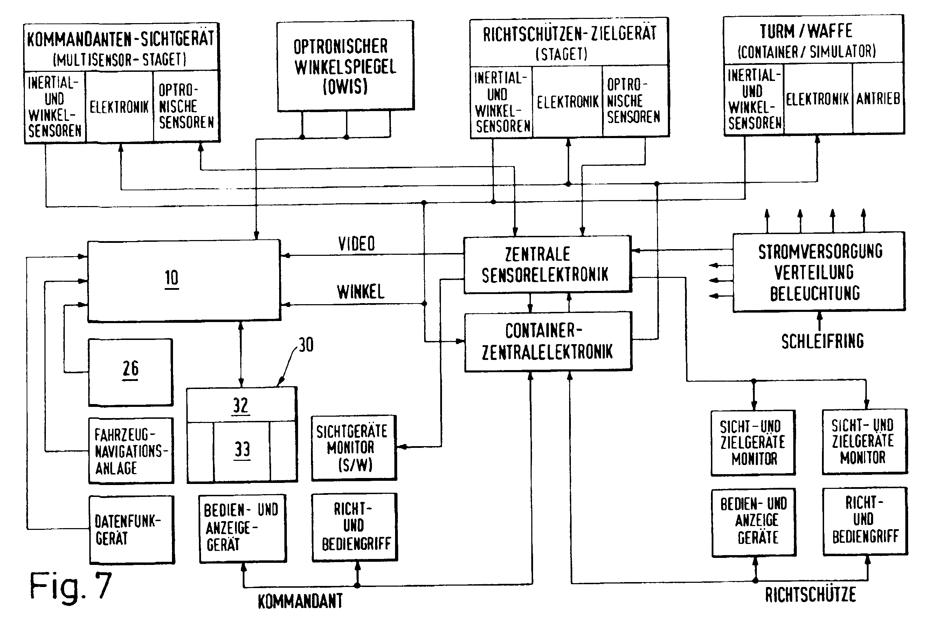

Fig. 7 zeigt ein Beispiel für die Einbindung einer ebenso wie in Fig. 2 mit 10 bezeichneten Einrichtung nach der Erfindung mit hochauflösendem Bildschirm 30 gemäß Fig. 2 in das in dem Versuchs träger vorgesehene Gesamtsystem. Die dabei mit Legenden belegten Kästchen sind nach Aufbau und Funktion für sich genommen bekannt. Das Zusammenwirken dieser Komponenten mit den Bezugszahlen 10,26,30,32,33 der Einrichtung nach der Erfindung ist für den Fachmann aus Fig. 7 ersichtlich.

Mit an die jeweilige Aufgabe angepaßten Abwandlungen ist ein Führungssystem zur Ausrüstung eines konkreten Fahrzeugs, wie eines Kampfpanzers, eines Luftabwehrpanzers und dgl., aufbaubar, was im Rahmen des fachmännischen Könnens liegt.

## Patentansprüche

1. Führungssystem zum Führen von Land Fahrzeugen, zwischen denen Informationen austauschbar sind, wobei jedes Fahrzeug eine Führungseinrichtung aufweist, in der gespeicherte Informationen, mittels Sensoren aus der Umgebung gewonnene und/oder über Datenfunk übermittelte Informationen und Informationen bezüglich des Zustandes von Baugruppen, wie die Position von Beobachtungsgerät am Fahrzeug, bereitgestellt werden und Kommunikationseinrichtungen, Vorrichtungen zum Auslösen von Funktionen, ein digitaler, mit einem Prozessor (21) und einem Arbeitsspeicher (22) versehener Führungsrechner sowie gegebenenfalls eine Navigationsanlage vorhanden sind,
wobei der Führungsrechner einen Graphikprozessor (23), eine Videoelektronik (24), ein Massenspeicherinterface (25) mit Massenspeicher (26) und mindestens einen interaktiven Bildschirm (30) umfaßt, über den sämtliche aufgenommenen. gespeicherten und abzugebenden Informationen in Form von elektronischen Daten betreffend die Führung, den Zustand und die Einsatzsituation des Fahrzeugs visualisiert werden,
wobei ein optischer Sensor zum Erzeugen eines Panoramabildes der Umgebung vorgesehen ist,
wobei ein vergrößernder Sensor zum Erzeugen eines Detailbildes der Umgebung vorgesehen ist,
wobei in dem Bildschirm (30) ein Hauptbildfeld (33:) für graphische Darstellung, nämlich wahlweise eine aus dem Massenspeicher entnommene Kartendarstellung oder ein durch den vergrößernden Sensor gewonnenes Detailbild der Umgebung,
und ein Panoramasichtfeld (32) für ein durch den optischen Sensor gewonnenes Panoramabild der Umgebung integriert ist,
wobei eine Panoramabild-/Kartendarstellungs-Korrelation durch Abbilden einer den vom vergrößernden Sensor anvisierten Bildausschnitt bezeichnenden Markierung (36) in dem Panoramasichtfeld (32) und durch Darstellen der Visierrichtung des vergrößernden Sensors als Richtstrahl in der Kartendarstellung im Hauptbildfeld (33) herstellbar ist, wobei die Winkelausrichtung des Richtstrahls in der Kartendarstellung dem momentanen Azimutrichtwinkel des Sensors folgt, und eine Panoramabild-/ Detailbild-Korrelation durch Abbilden der den vom vergrößernden Sensor anvisierten Bildausschnitt bezeichnenden Markierung (36) in dem Panoramabild, und durch Abbilden des Detailbildes der Umgebung in dem Hauptbildfeld (33) herstellbar ist, der momentan von dem vergrößernden Sensor anvisiert ist,
wobei in den Bildschirm (30) ein programmierbares Funktionstastenfeld (35) integriert ist, dessen Tasten mit Symbolen belegt sind, von denen jedes durch Betätigen einer entsprechenden Taste in das Bildschirmbild übertragbar sind, und wobei die auf dem Bildschirm des Führungsfahrzeuges angebotenen bzw. ausgewählten Informationen über die Kommunikationseinrichtungen an entsprechende Einrichtungen anderer Fahrzeuge eines Verbandes übermittelbar sind, um diese Informationen an den entsprechenden Einrichtungen der anderen Fahrzeuge zeitgleich zugänglich zu machen.

2. Führungssystem nach Anspruch 1, dadurch gekennzeichnet, daß das Panoramabild durch einen optronischen Winkelspiegel erzeugt ist.

3. Führungssystem nach Anspruch 1, oder 2 dadurch gekennzeichnet, daß der Bildschirm (30) berührungsempfindlich ausgebildet ist, so daß durch Berührung mit den Fingern Ergänzungen/Veränderungen des Bildschirmbildes generiert werden konnen.

4. Führungssystem nach Anspruch 3, dadurch gekennzeichnet, daß das Bild durch Streichen mit den Fingern über den Bildschirm in die gewünschte Richtung verschoben werden kann.

5. Führungssystem nach einem der Ansprüche 1 bis 4, dadurch gekennzeichnet daß das Detailbild oder die graphische Darstellung in dem Hauptbildfeld (33) in unterschiedlichen Maßstäben darstellbar ist.

6. Führungssystem nach einem der Ansprüche 1 bis 5, dadurch gekennzeichnet, daß das Bild, die Karte oder der Kartenausschnitt durch Streichen über den Bildschirm mit den Fingern in gleicher Geschwindigkeit verschiebbar ist, derart, daß bisher nicht sichtbare Bild- oder Kartenteile in dem Hauptbildfeld (33) sichtbar werden.

7. Führungssystem nach einem der Ansprüche 1 bis 6, dadurch gekennzeichnet, daß in den Bildschirm (30) ein Feld (34) für Statusanzeiger integriert ist.

8. Führungssystem nach einem der Ansprüche 1 bis 7, dadurch gekennzeichnet, daß ein hochauflösender Bildschirm mit farbigem Hauptbildfeld (33) verwendet ist.

9. Führungssystem nach einem der Ansprüche 1 bis 8, dadurch gekennzeichnet, daß in dem Massenspeicher außer Grunddaten, wie für die Abspeicherung von Kartenmaterial. Daten für Veränderungen von Situationen, wie Veränderung der Positionen von Fahrzeugen etc., in einer oder mehreren überlagernden Speicherschichten (Overlays) ablegbar sind.

## Claims

1. A control system for controlling land vehicles between which information is exchangeable, each vehicle having a control means in which stored information, information obtained by means of sensors from the surroundings and/or transmitted by radio data transmission, and information concerning the condition of components such as the position of observation means on the vehicle, is provided and communication means, means for initiating functions, a digital command computer having a processor (21) and a main memory (22) and optionally a navigation system are provided, wherein said command computer comprises a graphics processor (23), video electronics (24), a bulk storage interface (25) with a bulk storage (26) and at least one interactive video screen (30) through which all of the sensed, stored and outputted information in the form of electronic data relating to the control, the condition and the operational situation of the vehicle is visualised,
wherein an optical sensor is provided for generating a panoramic image of the surroundings,
wherein a enlarging sensor is provided for generating a detailed image of the surroundings,
wherein the video screen (30) has integrated therein a main image field (33) for graphic display, namely selectively a chart display taken from the bulk storage or a detailed image of the surroundings obtained by the enlarging sensor,
and an image field (32) for displaying a panoramic image of the surroundings obtained by the optical sensor,
wherein a panoramic image/chart display correlation can be established by displaying in the panoramic image field (32) a mark (36) designating the image section sighted by the enlarging sensor and by displaying the sighting direction of the enlarging sensor as a directional beam in the chart display in the main image field (33),
wherein the angular orientation of the directional beam in the chart display follows the instantaneous azimuthal direction angle of the sensor, and a panoramic image/detailed image correlation can be established by displaying in the panoramic image a mark (36) designating the image section sighted by the enlarging sensor, and by displaying the detailed image of the surroundings in the main image field (33) instantaneously sighted by the enlarging sensor, wherein a programmable function key field (35) is integrated into the video screen (30), the keys of which bear symbols each of which can be transferred to the video screen image by actuation of a corresponding key,
and wherein the information offered or selected on the video screen of the control vehicle can be transmitted via the communication means to corresponding means on other vehicles of a group in order to make this information accessible at the identical time to the corresponding means on the other vehicles.

2. A control system according to claim 1,
characterised in that the panoramic image is produced by an opto-electronic corner reflector.

3. A control system according to claim 1 or 2,
characterised in that the video screen (30) is designed to be touch-sensitive so that supplements or changes in the screen image may be generated by finger touch.

4. A control system according to claim 3,
characterised in that the image can be shifted in the desired direction by passing the fingers across the screen.

5. A control system according to any one of claims 1 to 4, characterised in that the detailed image or the graphic display in the main image field (33) may be displayed at different scales.

6. A control system according to any one of claims 1 to 5, characterised in that the image, chart or chart section may be shifted at the same speed by passing the fingers across the screen so that previously invisible image or chart sections can be made visible in the main image field (33).

7. A control system according to any one of claims 1 to 6, characterised in that a field (34) for status indications is integrated in the video screen (30).

8. A control system according to any one of claims 1 to 7, characterised in that a high-resolution video screen with a coloured main image field (33) is used.

9. A control system according to any one of claims 1 to 8, characterised in that the bulk storage is adapted to have stored therein, in addition to basic data such as data for storing chart material, data for changes of situations such as changes in the positions of vehicles etc. in one or several superimposed storage layers (overlays).

## Revendications

1. Système de conduite pour conduire des véhicules terrestres entre lesquels des informations peuvent être échangées et comportant chacun un dispositif de conduite, système dans lequel des informations mémorisées, obtenues au moyen de capteurs à partir de l'environnement et/ou transmises par radiotransmission de données et des informations relatives à l'état de sous-ensembles, telles que la position d'un appareil d'observation sur le véhicule, sont mises à disposition, et qui comporte des équipements de communication, des dispositifs pour déclencher des fondions, un ordinateur numérique de conduite avec un processeur (21) et une mémoire de travail (22), ainsi que, éventuellement, une installation de navigation, dont l'ordinateur de conduite comprend un processeur graphique (23), une électronique vidéo (24), une interface de mémoire de masse (25) avec une mémoire de masse (26) et au moins un écran interactif (30), par lequel sont visualisées toutes les informations reçues, mémorisées et à délivrer, sous la forme de données électroniques se rapportant à la conduite, à l'état et à la situation de mise en action du véhicule,
avec prévision d'un capteur optique pour générer une image panoramique de l'environnement et
avec prévision d'un capteur grossissant pour générer une image de détail de l'environnement,
et dans l'écran (30) duquel sont intégrées une zone d'image principale (33) pour représentation graphique, à savoir pour visualiser au choix une representation cartographique extraite de la mémoire de masse ou une image de détail de l'environnement obtenue par le capteur grossissant, et une zone d'image panoramique (32) pour une image panoramique de l'environnement obtenue par le capteur optique,
avec la possibilité de réaliser une corrélation image panoramique/représentation cartographique par visualisation dans la zone d'image panoramique (32) d'un repère ou cadre (36) désignant la partie d'image sur laquelle est pointé le capteur grossissant, et par visualisation dans la représentation cartographique de la zone d'image principale (33) de la direction de visée du capteur grossissant comme rayon directionnel, l'orientation angulaire de rayon directionnel suivant, dans la représentation cartographique, l'angle de pointage azimutal instantané du capteur, et une corrélation image panoramique/image de détail étant réalisable par visualisation dans l'image panoramique du repère ou cadre (36) désignant la partie d'image sur laquelle est pointé le capteur grossissant, et par visualisation de l'image de détail de l'environnement, sur laquelle est pointé à ce moment le capteur grossissant, dans la zone d'image principale (33),
dans l'écran (30) étant intégré un clavier programmable (35) de touches de fonctions, lesquelles touches portent des symboles pouvant être transférés chacun dans l'image présentée sur l'écran par l'actionnement de la touche correspondante,
et les informations présentées ou sélectionnées sur l'écran du véhicule pilote pouvant être transmises par les équipements de communication à des équipements correspondants d'autres véhicules d'une formation afin de rendre ces informations accessibles simultanément sur les équipements correspondants des autres véhicules.

2. Système de conduite selon la revendication 1, caractérisé en ce que l'image panoramique est produite par un goniomètre à réflecteur opto-électronique.

3. Système de conduite selon la revendication 1 ou 2, caractérisé en ce que l'écran (30) est un écran tactile dont l'attouchement par les doigts permet de produire des compléments et des changements de l'image présentée sur l'écran.

4. Système de conduite selon la revendication 3, caractérisé en ce que l'image peut être déplacée dans la direction désirée par un mouvement de glissement des doigts sur l'écran.

5. Système de conduite selon l'une des revendications 1 à 4, caractérisé en ce que l'image de détail ou la représentation graphique peut être visualisée à différentes échelles dans la zone d'image principale (33).

6. Système de conduite selon l'une des revendications 1 à 5, caractérisé en ce que l'image, la carte ou la partie de carte peut être déplacée, à la même vitesse, par un mouvement de glissement des doigts sur l'écran, de manière que des parties d'image ou de carte non visibles jusqu'alors deviennent visibles dans la zone d'image principale (33).

7. Système de conduite selon l'une des revendications 1 à 6, caractérisé en ce qu'une zone (34) pour des indications d'état est intégrée dans l'écran (30).

8. Système de conduite selon l'une des revendications 1 à 7, caractérisé en ce que l'écran utilisé est à haute définition et contient une zone d'image principale (33) en couleur.

9. Système de conduite selon l'une des revendications 1 à 8, caractérisé en ce que, outre des données de base, par exemple pour le stockage de matériau cartographique, on peut stocker dans la mémoire de masse, dans une ou plusieurs couches de mémoire superposées ("overlays"), des données pour modifier des situations, par exemple pour modifier les positions de véhicules et ainsi de suite.
